# EUROPEAN PATENT APPLICATION

(11) **EP 1 440 873 A1**
(43) Date of publication of application: **28.07.2004**
(21) Application number: 03001683.6
(22) Date of filing: 25.01.2003
(51) Int. Cl.: B62D 61/08, B62J 25/00

(54) **Footrest platform of medical scooter**

(71) Applicant: Pihsiang Machinery MFG. Co., Ltd., Hsin Feng Hsiang, Hsinchu County (TW)
(72) Inventor: Wu, Donald P.H., Hsinchu County, Taiwan (CN)
(74) Representative: Basfeld, Rainer, Dr. Dipl.-Phys.

(57) **Abstract**

A footrest platform (100) is mounted to a chassis (210) of a medical scooter. The footrest platform includes a net-like structure forming a plurality of interconnected apertures (20) for ventilation and drainage of water and elimination of deposition of dust on the platform. The net-like structure forms a rough pattern, which helps preventing slipping. A plurality of ribs (21) extends across the apertures (20) for reinforcing the net-like structure. Resilient fastening strips (10) are integrally formed on opposite sides of the net-like structure and are fit over the chassis of the medical scooter to secure the footrest platform to the chassis. An opening (30) is defined in the platform for the extension of a steering shaft (220) of the medical scooter therethrough.

## Description

### BACKGROUND OF THE INVENTION

### 1. Field of the Invention

The present invention relates generally to the field of medical scooter, and in particular to a footrest platform of the medical scooter having a net-like anti-slip configuration material for enhancing safety while driving the scooter drainage of water.

### 2. The Related Art

A medical scooter comprises a chassis on which a seat is mounted for supporting a driver on the scooter. A footrest platform is formed on the chassis in front of the seat for supporting the driver's feet. Figures 6 and 7 of the attached drawings show a conventional footrest platform of the medical scooter, in which the footrest platform comprises a foot board **A** mounted to a chassis **B1** of a medical scooter **B** by means of separate fastening strips **A1**. The footrest board **A** is generally made of plastics. Another example of the conventional footrest platform is shown in Figure 8 of the attached drawings in which a piece of blanket **C** is positioned and fixed on the footboard A.

Since the footboard A is attached to the chassis **B1** by the separate fastening strips **A1,** it is difficult to have the foot board **A** completely and securely fixed to the chassis **B1.** In addition, the fastening strips **A1** must be removed and replaced by new ones in order to remove the footrest platform A from the chassis **B1** and re-mount the platform **A** back to the chassis **B1.** This causes difficulty and inefficiency in mounting/dismounting the footrest platform **A**. Thus, cleaning the footrest platform **A** can only be done with the footrest platform **A** mounted on the chassis **B1**. In addition, the footboard **A** that is generally made of plastics, does not allow water or liquid to penetrate therethrough for drainage. Thus, the blanket **C** is easily subject to contamination.

Further, the conventional footrest platform is structurally weak, which makes it not able to support a great load.

It is thus desired to provide a footrest platform for overcoming the above problems.

### SUMMARY OF THE INVENTION

Accordingly, an object of the present invention is to provide a footrest platform for a medical scooter having a chassis, the footrest platform comprising resilient fastening members integrally formed with the platform for securely mounting to the chassis to attach the platform to the chassis.

Another object of the present invention is to provide a footrest platform for a medical scooter, the platform comprised of net-like structure for drainage of water and eliminating deposition of dust and also for visual observation and inspection of the frame or chassis of the scooter.

A further object of the present invention is to provide a footrest platform for a medical scooter having a net-like structure made of frictional resilient cables with reinforcement to effectively support the scooter driver and forming a friction enhanced net-like structure for elimination of potential slipping of the scooter driver, also with reduced costs of manufacturing.

To achieve the above objects, in accordance with the present invention, there is provided a footrest platform mounted to a chassis of a medical scooter. The footrest platform comprises a net-like structure forming a plurality of interconnected apertures for ventilation and drainage of water and elimination of deposition of dust on the platform. A plurality of ribs extends across the apertures for reinforcing the net-like structure. Resilient fastening strips are integrally formed on opposite sides of the net-like structure and are fit over the chassis of the medical scooter to secure the footrest platform to the chassis. An opening is defined in the platform for the extension of a steering shaft of the medical scooter therethrough.

### BRIEF DESCRIPTION OF THE DRAWINGS

The present invention will be apparent to those skilled in the art by reading the following description of a preferred embodiment thereof, with reference to the attached drawings, in which:

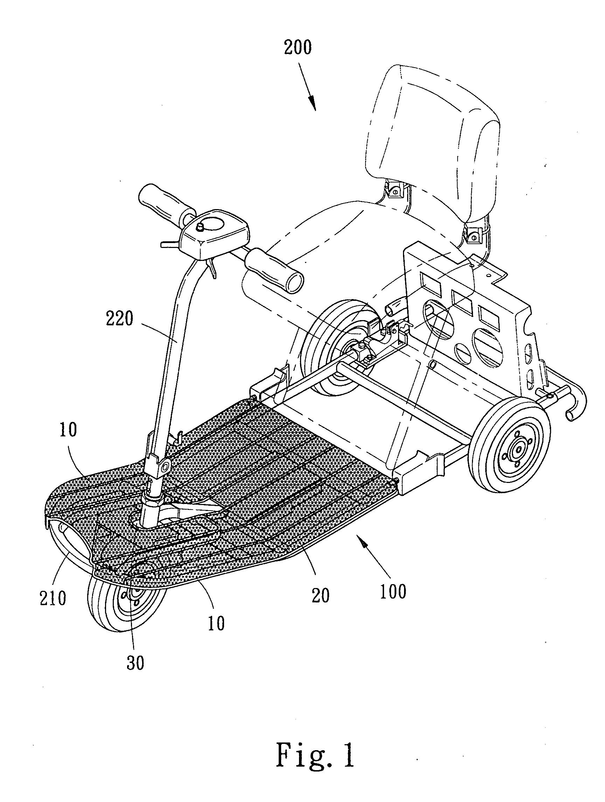

Figure 1 is a perspective view of a medical scooter in which a footrest platform in accordance with the present invention is mounted;

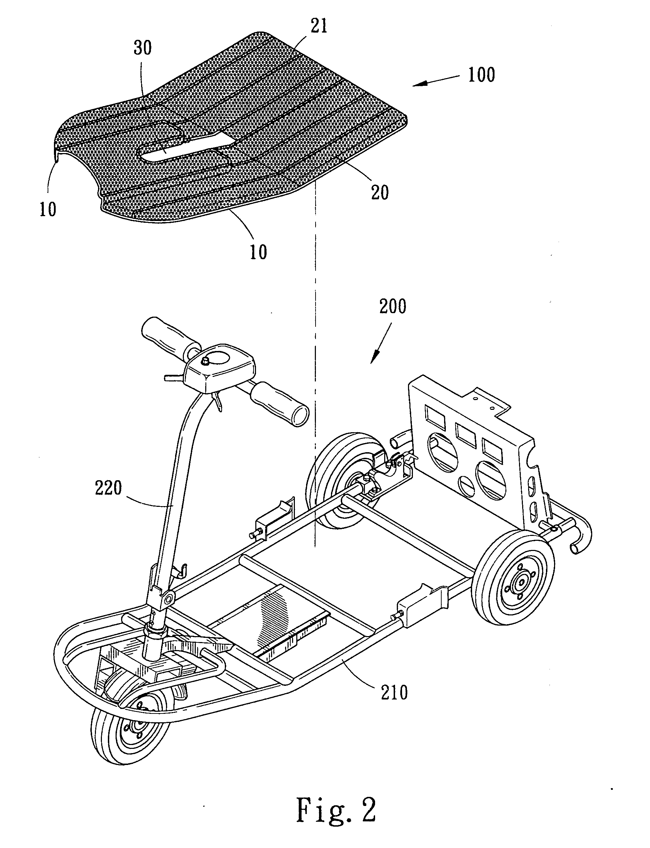

Figure 2 is an exploded view of the medical scooter shown in Figure 1;

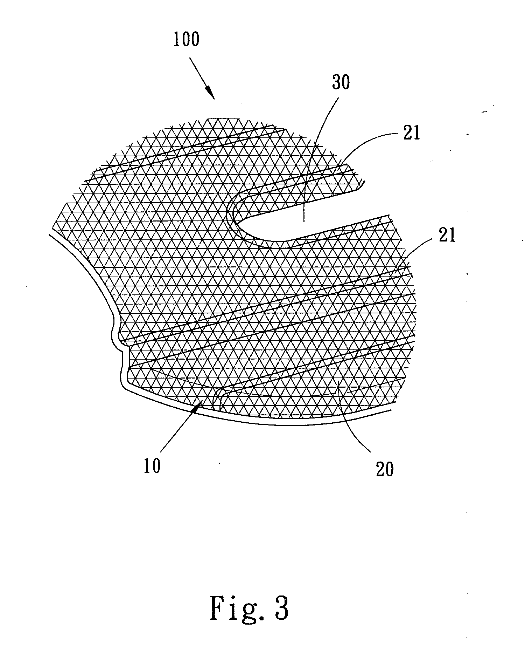

Figure 3 is an enlarged view of a portion of the footrest platform of the present invention;

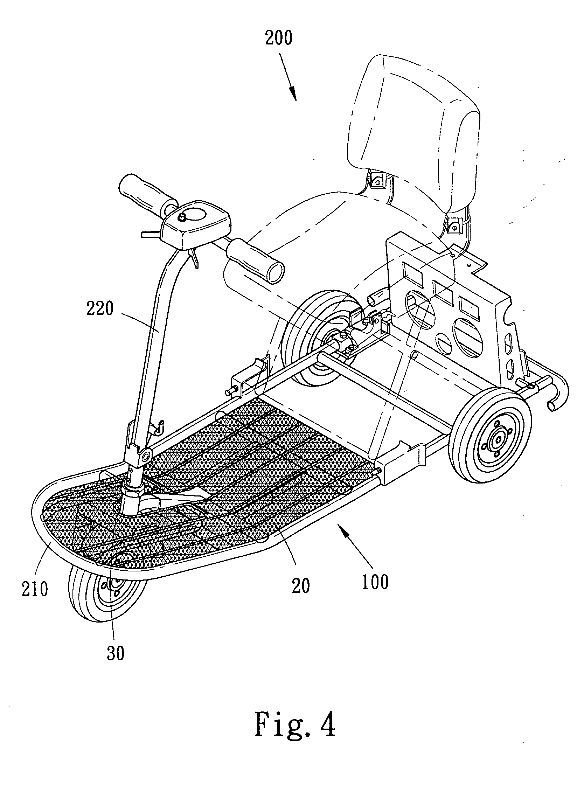

Figure 4 is a perspective view of a medical scooter in which a footrest platform in accordance with another embodiment of the present invention is mounted;

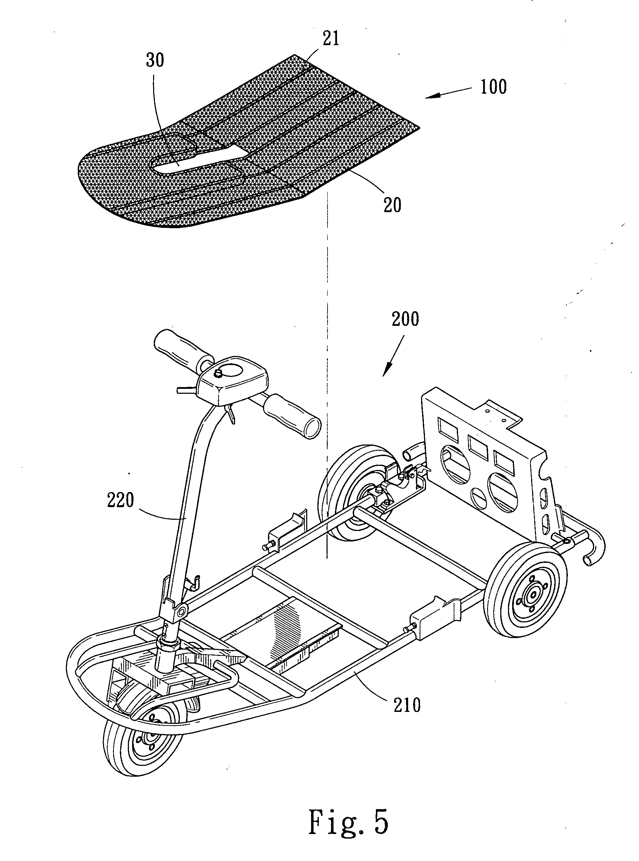

Figure 5 is an exploded view of the medical scooter shown in Figure 4;

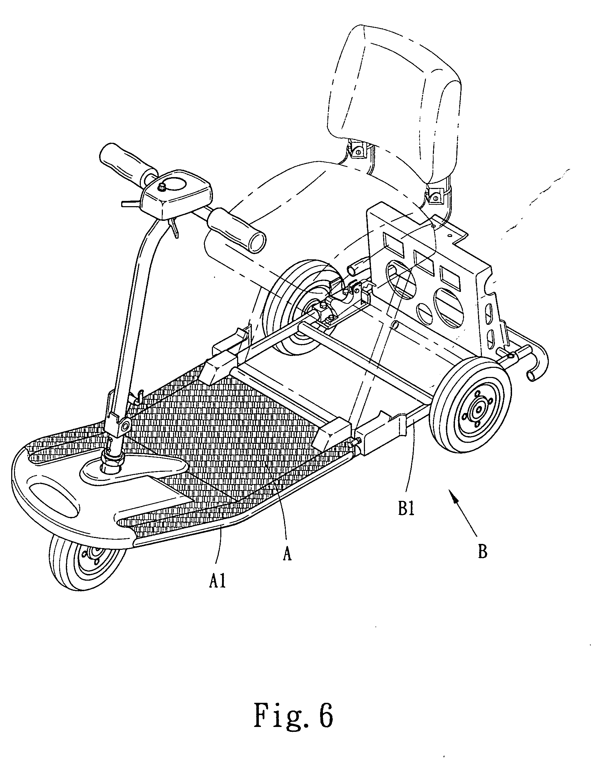

Figure 6 is a perspective view of a medical scooter in which a conventional footrest platform is mounted;

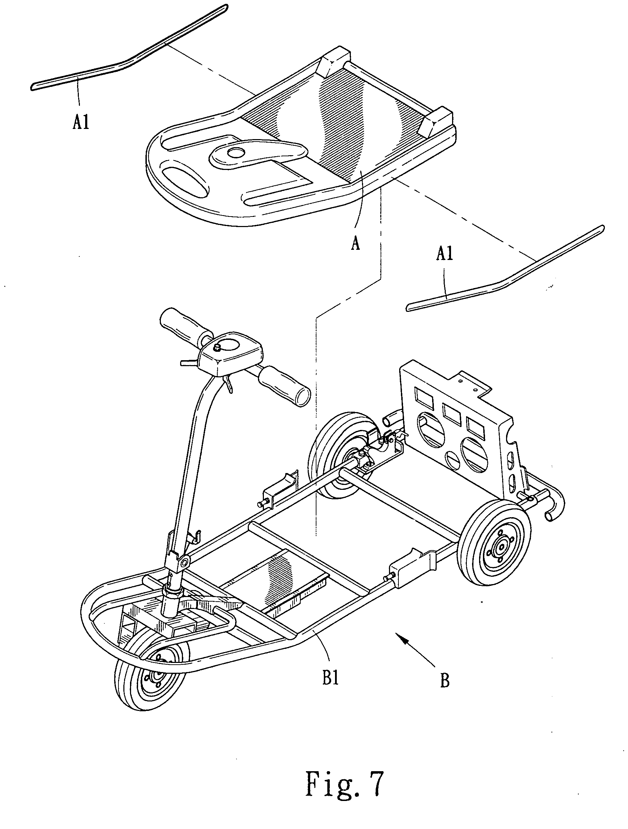

Figure 7 is an exploded view of the medical scooter shown in Figure 6; and

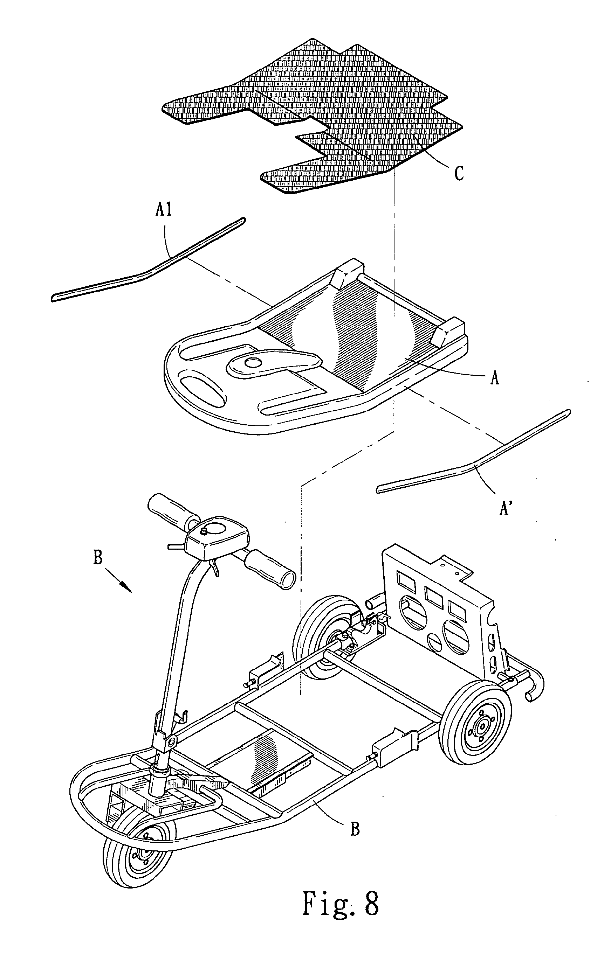

Figure 8 is an exploded view of a medical scooter in which another conventional footrest platform is mounted.

### DETAILED DESCRIPTION OF THE PREFERRED EMBODIMENT

With reference to the drawings and in particular to Figures 1 and 2, a medical scooter, generally designated with reference numeral 200, comprises a chassis 210 to which wheels (not labeled) are mounted. A steering shaft 220 extends from the chassis 210 in a vertical direction for controlling the moving direction of the medical scooter 200.

A footrest platform constructed in accordance with the present invention, generally designated with reference numeral 100, is mounted on the chassis 210 of the medical scooter 200. The footrest platform 100 comprises resilient strips 10 integrally formed on opposite edges thereof for fitting over opposite edges of the chassis 210 to secure the footrest platform 100 to the chassis 210. The resiliency of the strips 10 allows the strips 10 to elastically deform, thereby inducing a clamping force to securely attach the footrest platform 100 to the chassis 210. The resiliency also allows the strips 10 to be manually deformed for removal from the chassis 210. Thus, the footrest platform 100 of the present invention can be repeatedly and readily removed and re-mounted to the chassis 210.

Also referring to Figure 3, the footrest platform 100 has a net-like structure, comprising a plurality of apertures 20 interconnected with each other. The net-like structure can be made by weaving or intersecting flexible cables or wires, such as metal cables or metal wires, which together form a support surface having enhanced frictional effect to eliminate potential slipping of a person standing and moving in and out of the scooter 200. The footrest platform 100 comprises a plurality of ribs 21, such as thin metal bars, extending between and across the apertures 20 to mechanically reinforce the footrest platform 100. An opening 30 is formed in the footrest platform 100 for the extension of the steering shaft 220 therethrough.

The apertures 20 of the footrest platform 100 allow for air flow therethrough for ventilation purposes. The apertures 20 also allow for drainage of water deposited on the footrest platform 100, such as rains. Thus, water is not residual on the platform 100. This helps cleaning of the footrest platform 100 and also reduces the likelihood of falling down of the driver caused by slipping on the residual water.

The net-like configuration of the footrest platform 100 helps reducing the overall weight thereof and provides mechanical strength in resisting impact and colliding. The ribs 21 further enhance the mechanical strength of the footrest platform 100 whereby the scooter driver is allowed to stand up and even jump on the footrest platform 100. No undesired deformation may be induced on the platform 100.

If desired, a protection layer, such as a plastic layer, can be formed on the net-like structure of the footrest platform 100 made of metal cables or wires, which provides aesthetic function and helps preventing corrosion of the footrest platform 100 and potential slipping of the scooter driver.

Figures 4 and 5 show another embodiment of the footrest plate 100 in accordance with the present invention, which comprises a net-like structure similar to the previous embodiment illustrated in Figures 2 and 3. However, resilient strips 10 are omitted. Thus, the net-like structure is directly fixed to the chassis 210. Similarly the net-like structure can be formed with resilient cables, such as metal cables, on which a plastic layer is formed for protection and enhancement of friction. Since apertures 20 are formed in the net-like structure, drainage of water and flow of air can be provided readily. The size of the apertures 20 is preferably such that it prevents undesired penetration of water moving from underside of the chassis through the apertures 20.

Although the present invention has been described with reference to the preferred embodiment thereof, it is apparent to those skilled in the art that a variety of modifications and changes may be made without departing from the scope of the present invention which is intended to be defined by the appended claims.

## Claims

1. A footrest platform adapted to be mounted to a chassis of a medical scooter, the footrest platform comprising a net-like structure made by connecting resilient cables to form a plurality of interconnected apertures whereby a friction-enhanced surface is formed on the footrest platform.

2. The footrest platform as claimed in Claim 1, wherein a plastic protection layer is formed on the net-like structure for enhancing aesthetic appearance, protection of the cables and prevention of slipping.

3. The footrest platform as claimed in Claim 1, wherein the net-like structure is made by weaving and intersecting metal cables forming a friction enhanced surface.

4. The footrest platform as claimed in Claim 1, wherein the net-like structure comprises resilient fastening strips formed on opposite sides of the net-like structure for being fit over the chassis of the medical scooter to secure the footrest platform to the chassis.

5. The footrest platform as claimed in Claim 1, wherein the net-like structure comprises ribs extending between and across the apertures for reinforcing the net-like structure.

6. The footrest platform as claimed in Claim 1, wherein an opening is defined in the footrest platform for extension of a steering shaft of the medical scooter therethrough.
